# EUROPÄISCHE PATENTSCHRIFT

(11) **EP 2 082 146 B1**
(45) Veröffentlichungstag und Bekanntmachung des Hinweises auf die Patenterteilung: **03.03.2010**
(21) Anmeldenummer: 07815128.9
(22) Anmeldetag: 02.10.2007
(51) Int. Cl.: F16D 1/072, F16D 3/38

(54) **VERBINDUNG EINER ANTRIEBSWELLE**
CONNECTION OF A DRIVE SHAFT
ASSEMBLAGE D'UN ARBRE DE TRANSMISSION

(30) Priorität: 25.10.2006 DE 102006051129
(43) Veröffentlichungstag der Anmeldung: 29.07.2009
(73) Patentinhaber: ThyssenKrupp Presta Aktiengesellschaft, 9492 Eschen (LI)
(72) Erfinder: SCHWARZHANS, Paul, 6800 Feldkirch (AT)
(74) Vertreter: Hofmann, Ralf U.
(86) Internationale Anmeldenummer: PCT/AT2007/000461
(87) Internationale Veröffentlichungsnummer: WO 2008/049139

(56) Entgegenhaltungen:
- DE-A1- 2 333 040
- GB-A- 918 242
- JP-A- 58 211 019
- US-A- 5 033 903

## Beschreibung

Die Erfindung bezieht sich auf eine Verbindung einer Antriebswelle, insbesondere einer Lenkwelle, mit einer Kreuzgelenkgabel, welche eine Gabelbasis mit einer eine Längsachse aufweisenden Durchgangsöffnung zur Aufnahme eines Verbindungsabschnitts der Antriebswelle und zwei von einer Sattelseite der Gabelbasis, die einer Bodenseite der Gabelbasis gegenüberliegt, abstehende Schenkel mit Lageröffnungen umfasst, wobei die Durchgangsöffnung der Gabelbasis mit einer Verzahnung mit Zähnen versehen ist, deren Zahnkämme in Draufsicht auf einen jeweiligen Zahn gesehen in Richtung der Längsachse der Durchgangsöffnung verlaufen, und die Antriebswelle in die Durchgangsöffnung der Gabelbasis eingepresst ist.

Weiters bezieht sich die Erfindung auf ein Verfahren zur Herstellung einer solchen Verbindung.

Eine Verbindung der eingangs genannten Art zwischen einer Lenkwelle und einer Kreuzgelenkgabel ist bekannt. Bei der Fertigung wird zunächst die Kreuzgelenkgabel mit den Lageröffnungen der Schenkel und der Verzahnung in der Durchgangsöffnung der Gabelbasis ausgebildet. In der Folge wird ein Gelenkkreuz in die Gelenkgabel eingelegt und Lager zur drehbaren Lagerung des Gelenkkreuzes werden in die Lageröffnungen der Schenkel eingepresst. Die Toleranzen der Lageröffnungen, insbesondere in Hinblick auf die parallele Ausrichtung ihrer Achsen, müssen hierbei sehr gering sein, damit die Reibkräfte möglichst gering sind. In der Folge wird der Verbindungsabschnitt der Welle in die Durchgangsöffnung der Gabelbasis eingepresst, wodurch ein Presssitz des Verbindungsabschnitts der Antriebswelle mit der Gabelbasis ausgebildet wird. Hierbei werden durch die Verzahnung in der Durchgangsöfffnung der Gabelbasis die umlaufenden Materialerhebungen des Verbindungsabschnitts lokal verformt. Die Zähne der Verzahnung in der Durchgangsöffnung der Gabelbasis greifen in die in den Materialerhebungen ausgebildeten Vertiefungen ein. Auf diese Weise wird eine kraft- und bezüglich einer Drehung der Antriebswelle formschlüssige Verbindung mit der Gabelbasis der Kreuzgelenkgabel ausgebildet. Allerdings kommt es beim Einpressen auch zu Verformungen der Kreuzgelenkgabel, wodurch die auftretenden Reibkräfte erhöht werden.

Verbindungen zwischen Antriebswellen und Kreuzgelenkgabeln sind in unterschiedlichen weiteren Ausführungsformen bekannt. So ist beispielsweise aus der DE 23 33 040 A1 eine Verbindung zwischen einer Antriebswelle und der Gabel eines Kreuzgelenks bekannt, bei der der Verbindungsabschnitt der Antriebswelle an seinem Umfang längs verzahnt wird und in der Folge in die glatte Bohrung der Gabel eingestanzt wird. Es wird beim Einstanzen Material der Wandung der Durchgangsöffnung in der Gabelbasis spanabhebend entfernt. Dies führt dazu, dass sich eine gegenüber einer Drehung der Antriebswelle formschlüssige Verbindung ergibt, die aber nicht oder nur wenig kraftschlüssig ist. Bei der aus der US 5,090,834 A bekannten Verbindung wird ein hexagonal geformtes Wellenende in eine "blumenförmig" ausgebildete Durchgangsöffnung in der Gabelbasis eingedrückt. Die auftretenden Verformungskräfte sind hierbei relativ hoch und der erreichbare Kraftschluss ist beschränkt.

Bekannt sind weiters Verbindungen, bei denen Nocken oder Zahnräder auf Nockenwellen aufgepresst werden. Bei der aus der DE 41 21 951 C1 bekannten Nockenwelle werden hierbei in den Bereichen der Nockenwelle, in welchen die Nocken festgelegt werden sollen, Bereiche mit vergrößerten Durchmessern ausgebildet. Diese Bereiche werden durch Rollen oder Walzen gefertigt, wobei durch Materialverdrängung in Umfangsrichtung der Welle umlaufende Materialerhebungen (Wülste oder Stege) entstehen. Ein jeweiliger Nocken wird mit seiner zylindrischen Bohrung auf den entsprechenden Bereich mit vergrößertem Durchmesser aufgepresst, wodurch ein Presssitz ausgebildet wird. In ähnlicher Weise werden bei der in der DE 42 18 624 C2 beschriebenen Nockenwelle Nocken auf aufgeweitete Abschnitte der Nockenwelle aufgepresst. Die aufgeweiteten Abschnitte können wiederum von umlaufenden Materialerhebungen (=einem ringförmigen Nutenrändel) oder anderen Rändeln gebildet werden. Eine weitere Nockenwelle mit aufgepressten Nocken und einem aufgepressten Zahnrad ist aus der US 4,630,498 A bekannt. Die Nocken und das Zahnrad bestehen jeweils aus mehreren aneinanderliegenden Platten. Diese Platten weisen Durchgangsöffnungen auf, die auf eine in Längsrichtung der Nockenwelle verlaufende Verzahnung aufgeschoben werden, welche sich über den Großteil der Länge der Nockenwelle erstreckt. Zur Aufnahme von Fertigungstoleranzen verjüngen sich die Zähne jeweils von einem Ende der Verzahnung in Richtung zum andern Ende der Verzahnung keilförmig. Die Durchgangsöffnungen in den Plättchen der Nocken und des Zahnrades sind vor dem Aufschieben auf die Welle glatt.

Aufgabe der Erfindung ist es, eine verbesserte Verbindung der eingangs genannten Art bereitzustellen, durch welche geringe Reibkräfte für die Lagerung des Gelenkkreuzes in der Gelenkgabel erreicht werden können. Erfindungsgemäß gelingt dies durch eine Verbindung mit den Merkmalen des Anspruchs 1 bzw. durch ein Verfahren mit den Merkmalen des Anspruchs 9.

Der Erfindung liegt zunächst die Erkenntnis zugrunde, dass es bei einer Ausbildung, bei der sich die Kämme der Verzahnung der Durchgangsöffnung der Gabelbasis auf dem Mantel eines gedachten Zylinders befinden, durch das Einpressen des Verbindungsabschnitts in diese Verzahnung im Bereich des Beginns der Verzahnung zu einer größeren nach außen gerichteten Kraftkomponente als in einem Endbereich der Verzahnung (=einem der Sattelseite der Gabelbasis benachbarten Abschnitt der Verzahnung) kommt. Durch diese unterschiedlichen Kraftkomponenten wird ein Drehmoment auf die Schenkel der Kreuzgelenkgabel ausgeübt, wodurch sich diese gegen das von der Kreuzgelenkgabel gelagerte Gelenkkreuz bzw. dessen in die Lageröffnungen eingesetzte Lager verspannen, was auch zu einer Erhöhung der Reibkräfte führt.

Durch die Erfindung wird vorteilhafterweise einer Verbiegung der Schenkel der Gabel beim Einpressen des Verbindungsabschnitts der Antriebswelle entgegengewirkt..Aufgrund der erfindungsgemäßen Verengung (=Verjüngung) der Durchgangsöffnung der Gabelbasis durch die geneigt verlaufenden Kämme der Verzahnung können die durch das Einpressen hervorgerufenen nach außen wirkenden Kraftkomponenten über die Länge der Verzahnung aneinander angeglichen werden. Dadurch kann einer Abweichung der Achsen der Lageröffnungen in den Schenkeln gegenüber ihrer parallelen Ausrichtung entgegengewirkt werden. Die Achsen der Lageröffnungen sind vorzugsweise sowohl vor als auch nach dem Einpressen des Verbindungsabschnitts der Antriebswelle parallel zueinander ausgerichtet.

In einer vorteilhaften Ausführungsform der Erfindung liegen die Kämme der Zähne der Verzahnung auf einem gedachten Kegelmantel, die Durchgangsöffnung verengt sich somit in der besonders bevorzugten Ausführungsform über ihre gesamte Länge von der Bodenseite zur Sattelseite der Gabelbasis hin konisch. Je nach Ausführungsform kann es jedoch ausreichend sein, die Verjüngung der Zahnkämme nur über einen Bereich zwischen der ganzen und zwei Drittel oder sogar nur der Hälfte ihrer Länge vorzusehen.

Die Scheitel der Materialerhebungen des Verbindungsabschnitts der Antriebswelle liegen vorzugsweise auf dem Mantel eines gedachten Zylinders.

Weitere Vorteile und Einzelheiten der Erfindung werden im Folgenden anhand der beiliegenden Zeichnung erläutert.

In der Zeichnung zeigen:
- Fig. 1: einen schematischen Längsmittelschnitt durch eine Kreuzgelenkgabel gemäß der Erfindung;
- Fig. 2a: eine schematische vergrößerte Darstellung der Kreuzgelenkgabel im Bereich der Gabelbasis, gemäß einer ersten Ausführungsform der Erfindung;
- Fig. 2b: eine dreidimensionale Darstellung eines Zahns der Verzahnung in der Durchtrittsöffnung der Gabelbasis gemäß dieser Ausführungsform;
- Fig. 3a: eine schematische Darstellung entsprechend Fig. 2a eines Abschnitts einer Kreuzgelenkgabel gemäß einer zweiten Ausführungsform der Erfindung;
- Fig. 3b: eine dreidimensionale Darstellung eines Zahns der Verzahnung in der Durchtrittsöffnung der Gabelbasis gemäß dieser zweiten Ausführungsform der Erfindung;
- Fig. 4: einen den Verbindungsabschnitt umfassenden Teil einer Antriebswelle zur Verbindung mit der Kreuzgelenkgabel;
- Fig. 5: eine Schrägsicht der Kreuzgelenkgabel von Fig. 1;
- Fig. 6: eine schematische Darstellung eines Abschnitts der Antriebswelle und der Kreuzgelenkgabel im noch unverbundenen Zustand, wobei die Kreuzgelenkgabel zusammen mit einem von der Kreuzgelenkgabel drehbar gelagerten Gelenkkreuz und einer weiteren mit einer Antriebswelle verbundenen Kreuzgelenkgabel dargestellt ist, in Schrägsicht;
- Fig. 7: der verbundene Zustand der Kreuzgelenkgabel mit der Antriebswelle.

In den Figuren ist eine Kreuzgelenkgabel 1 eines in einem Lenksystem eingesetzten Kreuzgelenks (=Kardangelenks) dargestellt. Durch das Kreuzgelenk werden somit zwei Lenkwellen 2, 3 miteinander verbunden.

Die Kreuzgelenkgabel 1 umfasst eine Gabelbasis 4 mit einer Bodenseite 5 und einer Sattelseite 6. Die Bodenseite 5 weist in die Richtung, in welche sich die mit der Kreuzgelenkgabel 1 verbundene Lenkwelle 2 ausgehend von der Kreuzgelenkgabel 1 erstreckt. Von der der Bodenseite 5 gegenüberliegenden Sattelseite 6 stehen auf gegenüberliegenden Seiten einer die Gabelbasis 4 durchsetzenden Durchgangsöffnung 7 Schenkel 8, 9 ab. Die Schenkel 8, 9 weisen jeweils eine Lageröffnung 10, 11 auf. Die Lageröffnungen 10, 11 nehmen Lager 12, insbesondere Nadellager, zur verschwenkbaren Lagerung eines Gelenkkreuzes 13 auf.

Die Mantelfläche der Durchgangsöffnung 7 in der Gabelbasis 4 ist mit einer Verzahnung 14 versehen, deren Ausbildung weiter unten noch genauer erläutert wird.

Die mit der Kreuzgelenkgabel 1 zu verbindende Lenkwelle 2 umfasst einen in einem Endbereich der Lenkwelle 2 liegenden Verbindungsabschnitt 15. In diesem Verbindungsabschnitt 15 ist die Lenkwelle 2 mit umlaufenden Materialerhebungen 16 versehen. Diese umlaufenden Materialerhebungen 16 könnten beispielsweise auch als umlaufende Wülste oder Stege bezeichnet werden.

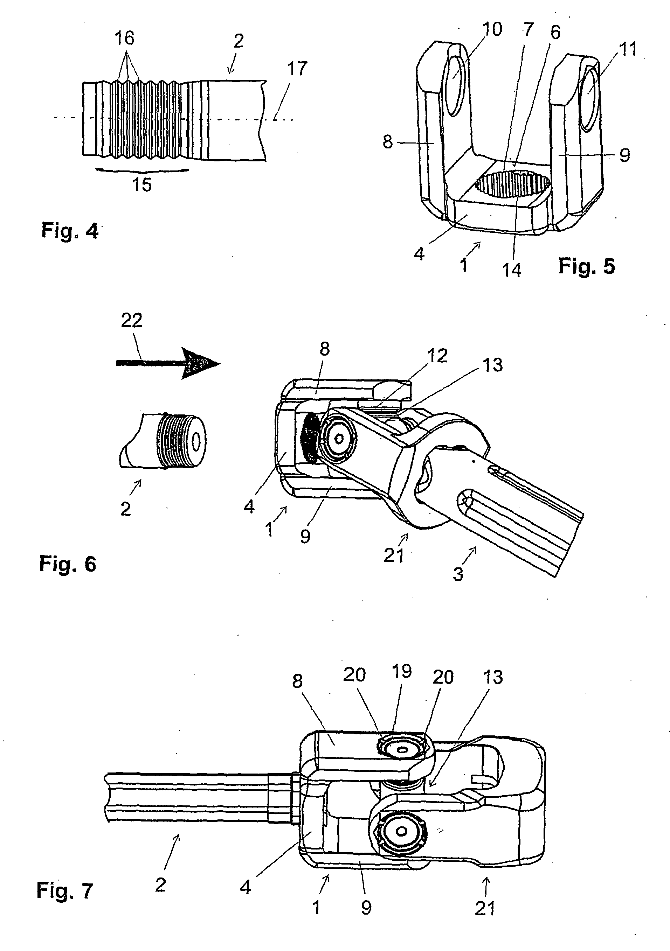

Im gezeigten Ausführungsbeispiel sind die umlaufenden Materialerhebungen 16 ringförmig ausgebildet, wie dies am besten aus Fig. 4 ersichtlich ist, d.h. es ist eine Mehrzahl von nebeneinander angeordneten umlaufenden ringförmigen Wülsten oder Stegen vorhanden, welche vorzugsweise senkrecht zur Längsachse 17 der Lenkwelle 2 ausgerichtet sind. Statt dessen könnten die umlaufenden Materialerhebungen auch in Form von Windungen eines Gewindes ausgebildet sein.

Die umlaufenden Materialerhebungen 16 können vorzugsweise durch Materialverdrängung ausgebildet werden, insbesondere mittels rollender Werkzeuge, wie sie auch zum Herstellen von aufgerollten Gewinden dienen. Es kann dann gesagt werden, der Verbindungsabschnitt 15 ist mit einer Rollierung bzw. mit einem ringförmigen Nutenrändel versehen.

Bei der Montage wird nach der Herstellung der Kreuzgelenkgabel 1 üblicherweise zunächst die Lagerung des Gelenkkreuzes 13 in der Kreuzgelenkgabel 1 ausgebildet. Hierbei werden die entsprechenden Zapfen des Gelenkkreuzes 13 (vgl. Fig. 7) im Bereich der Lageröffnungen 10, 11 platziert und in der Folge werden die Lager 12 in die Lageröffnungen 10, 11 über die Zapfen des Gelenkkreuzes eingesetzt. In der Folge können Deckel 19 aufgebracht und beispielsweise durch Verstemmungen 20 befestigt werden. Dieser Fertigungszustand ist in Fig. 6 dargestellt, wobei das Gelenkkreuz 13 bereits in einer zweiten Kreuzgelenkgabel 21 drehbar gelagert dargestellt ist, die mit einer weiteren Lenkwelle 3 verbunden ist.

In der Folge wird die Lenkwelle 2 mit ihrem Verbindungsabschnitt 15 in achsialer Richtung der Lenkwelle 2 in die Durchgangsöffnung 7 eingepresst, wie dies durch den Pfeil 22 in Fig. 6 angedeutet ist. Der verbundene Zustand zwischen der Lenkwelle 2 und der Kreuzgelenkgabel 1 ist in Fig. 7 dargestellt (die mit der zweiten Kreuzgelenkgabel 21 verbundene Lenkwelle 3 ist hier der Einfachheit halber weggelassen).

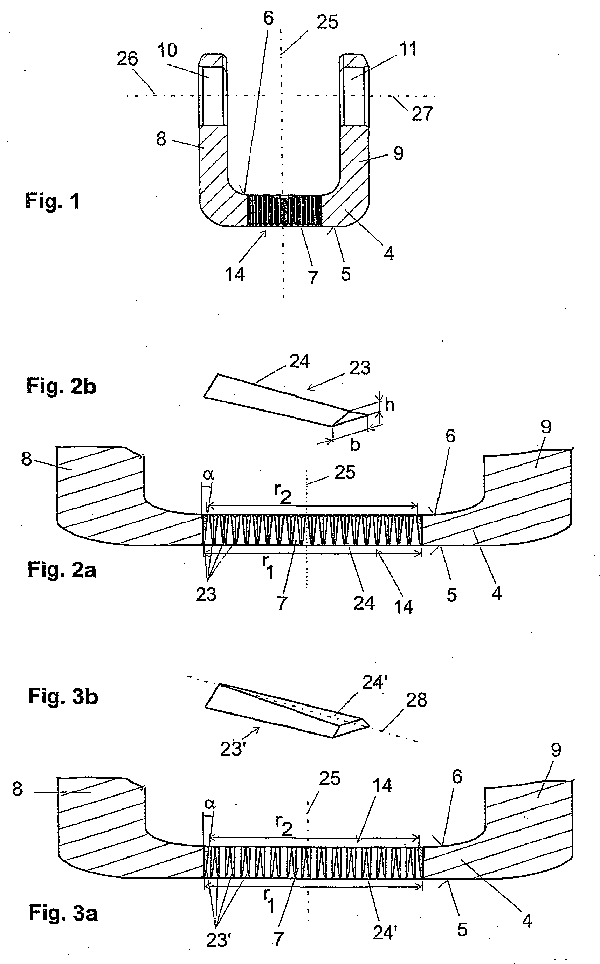

Eine erste Ausführungsform für die Verzahnung 14 der Durchgangsöffnung 7 wird im Folgenden anhand der Fig. 2a und 2b erläutert. Die Verzahnung 14 wird von einer Reihe von in Umfangsrichtung der Durchgangsöffnung 7 aneinander anschließenden Zähnen 23 gebildet. Ein solcher Zahn 23 ist in Fig. 2b in Schrägsicht dargestellt. Die Zähne 23 weisen jeweils einen Zahnkamm 24 auf, der sich in Draufsicht auf den jeweiligen Zahn 23 gesehen über die Durchgangsöffnung 7 in Richtung der Längsachse 25 der Durchgangsöffnung 7 erstreckt, d.h. der Zahnkamm 24 und die Längsachse 25 der Durchgangsöffnung 7 liegen in einer gemeinsamen Ebene. Dabei sind kleinere Abweichungen, beispielsweise bedingt durch Fertigungstoleranzen, umfasst.

Die Zahnkämme 24 weisen hierbei einen gegenüber der Längsachse 25 der Durchgangsöffnung 7 geneigten Verlauf auf, wobei sie sich von der Bodenseite 5 zur Sattelseite 6 hin der Längsachse 25 annähern. Dies ist insbesondere im parallel zur Längsachse 25 der Durchgangsöffnung 7 verlaufenden Längsschnitt durch einen jeweiligen Zahn 23 ersichtlich, vgl. Fig. 2a für die beiden geschnitten dargestellten Zähne. Der Neigungswinkel α, ist in Fig. 2a für einen der beiden Zähne 23 eingezeichnet, welche in der Schnittebene liegen, die parallel zur Längsachse 25 ausgerichtet ist und sich durch diese erstreckt. Durch den geneigten Verlauf der Zahnkämme 24 verengt sich die Durchgangsöffnung 7, also ihr freier Durchmesser bzw. ihre zwischen den Zahnkämmen 24 gemessene lichte Weite, von der Bodenseite 5 zur Sattelseite 6 hin. Die Öffnungsweite der Durchgangsöffnung 7 ist in Fig. 2a im Mündungsbereich zur Bodenseite 5 mit r₁ und im Mündungsbereich zur Sattelseite 6 mit r₂ bezeichnet. r₂ ist kleiner als r₁.

Beispielsweise liegt der Neigungswinkel α im Bereich zwischen 0,2° und 2°.

Wenn die Lenkwelle 2 mit ihrem Verbindungsabschnitt 15 in die Durchgangsöffnung 7 eingepresst wird, so kommt es zu von der Längsachse 25 weggerichteten Kräften. Bei einem Verlauf der Zahnkämme 24 parallel zur Längsachse 25, d.h. bei einer konstanten Öffnungsweite der Durchgangsöffnung 7, wären die nach außen wirkenden Kräfte im an die Bodenseite 5 anschließenden Bereich der Durchgangsöffnung 7 wesentlich größer als im an die Sattelseite 6 anschließenden Bereich. Es tritt dadurch ein Drehmoment auf, welches im Sinne eines Zusammendrückens der freien Enden der Schenkel 8, 9 wirkt. Es wurde beobachtet, dass im freien Zustand der Schenkel (ohne drehbar gelagertes Gelenkkreuz 13) die freien Enden der Schenkel 8, 9 im eingepressten Zustand der Lenkwelle 2 sich gegenüber dem getrennten Zustand von Kreuzgelenkgabel 1 und Lenkwelle 2 bei einer solchen Ausbildung der Verzahnung beispielsweise um 0,4 mm aneinander angenähert haben. Im eingesetzten und gelagerten Zustand des Gelenkkreuzes 13 kann dieser Wert beispielsweise immer noch 0,05 mm betragen. Es wird dadurch eine Spannung auf die Wälzkörper der Lager 12 ausgeübt, was zu einer Erhöhung der Reibung führt.

Durch die beschriebene erfindungsgemäße Ausbildung der Verzahnung 14 können die nach außen wirkenden Kraftkomponenten im an die Bodenseite 5 anschließenden Bereich der Verzahnung 14 und im an die Sattelseite 6 anschließenden Bereich der Verzahnung 14 aneinander angeglichen werden. Dadurch wird beim Einpressen bzw. im eingepressten Zustand der Lenkwelle 2 ein Auftreten von auf die Schenkel 8, 9 wirkenden Drehmomenten vermieden bzw. werden solche stark verringert. Somit bleibt eine vor dem Einpressen der Lenkwelle 2 vorliegende parallele Ausrichtung der Längsachsen 26, 27 der Lageröffnungen 10, 11 auch nach dem Einpressen der Lenkwelle 2 erhalten bzw. es tritt durch das Einpressen der Lenkwelle 2 nur eine geringfügige Änderung in der Ausrichtung der Längsachsen 26, 27 auf, die ohne eingesetztes und gelagertes Gelenkkreuz 13 zumindest weniger als die Hälfte des Wertes beträgt, der bei einer zur Längsachse 25 parallelen Ausrichtung der Zahnkämme 24 auftreten würde. Beispielsweise liegen die freien Enden der Schenkel 8, 9 nach dem Einpressen der Lenkwelle 2 bei der erfindungsgemäßen Ausbildung der Verzahnung 14 somit im Falle ohne eines zuvor eingesetzten Gelenkkreuzes um weniger als 0,2mm bzw. im Falle eines zuvor eingesetzten Gelenkkreuzes um weniger als 0,025mm näher beieinander als vor dem Einpressen der Lenkwelle 2, vorzugsweise ist dieser Wert noch deutlich kleiner.

Bei der in den Fig. 2a und 2b dargestellten Ausführungsform vergrößert sich die Breite b der Basis eines jeweiligen Zahns 23 von der Bodenseite 5 zur-Sattelseite 6 hin, ein jeweiliger Zahn 23 wird also nicht nur höher sondern auch breiter. Beispielsweise könnte auch die Breite b der Basis über die Länge des Zahns gleich bleiben und nur die Höhe h von der Bodenseite 5 zur Sattelseite 6 hin zunehmen.

Die Zähne 23 sind in den Fig. 2a und 2b zu ihren Zahnkämmen 24 hin spitz zulaufend dargestellt, d.h. die Zahnkämme 24 sind linienförmig ausgebildet. Die Zähne 23 könnten im Bereich ihrer freien Enden beispielsweise auch abgerundet ausgebildet sein. Auch hier würde sich ein linienförmiger Zahnkamm 24 ergeben. Statt dessen könnten die Zahnkämme 24 auch von einem - mehr oder weniger ebenen - Plateau gebildet werden. Die Zahnkämme 24 könnten in diesem Fall in Form einer streifenförmigen Fläche ausgebildet sein. Der Verlauf der Zahnkämme 24 wäre hierbei in Draufsicht gesehen nach wie vor in Richtung der Längsachse 25, d.h. die Mittellinie dieser streifenförmigen Fläche würde mit der Längsachse 25 in einer gemeinsamen Ebene liegen.

Derartige Zähne, wie sie zuvor beschrieben und in den Fig. 2a und 2b dargestellt sind, könnten beispielsweise durch einen Umformprozess hergestellt werden, also mittels eines Umformwerkzeuges geformt werden, insbesondere gepresst werden.

Eine weitere mögliche Ausführungsform für die Verzahnung 14 ist in den Fig. 3a und 3b dargestellt. Diese Ausbildungsform eignet sich insbesondere für eine Herstellung der Zähne mittels eines spanabhebenden Verfahrens, insbesondere durch Räumen mittels eines Räumwerkzeuges. Die Zähne 23' werden hierbei zunächst über die Länge der Durchgangsöffnung 7 mit gleicher Höhe ausgebildet. In der Folge werden die Kämme der Zähne 23' durch ein spanabhebendes Verfahren bearbeitet, insbesondere konisch überdreht oder überfräst. Die Höhe der Zähne 23' wird dadurch von der Sattelseite 6 zur Bodenseite 5 hin verringert. Es bilden sich dadurch plateauförmige Zahnkämme 24', wobei sich die Breite des Plateaus von der Sattelseite 6 zur Bodenseite 5 hin vergrößert. Die Mittellinie 28 des plateauförmigen Zahnkamms 24' liegt in Draufsicht auf den Zahn 23 gesehen parallel zur Längsachse 25, d.h. die Mittellinie 28 und die Längsachse 25 liegen in einer gemeinsamen Ebene.

Wiederum verlaufen die Zahnkämme 24' geneigt zur Längsachse der Durchgangsöffnung 7, wobei sie sich von der Bodenseite 5 zur Sattelseite 6 hirn zunehmend an die Längsachse 25 annähern. Der Neigungswinkel α ist für einen der beiden in Fig. 3a geschnitten dargestellten Zähne 23' eingezeichnet.

Im Falle eines konischen Überdrehens oder Überfräsens werden die plateauförmigen Zahnkämme 24' jeweils von einem Abschnitt eines Zylindermantels gebildet, dessen Mittellinie die Längsachse 25 ist..

Beim Einpressen des Verbindungsabschnitts 15 der Lenkwelle 2 in die Durchgangsöffnung 7 der Gabelbasis 4 kommt es zu einer Verformung der Materialerhebungen 16 durch die Zähne 23, 23' der Verzahnung 14. Hierbei werden von den Zähnen 23, 23' der Verzahnung 14 Vertiefungen in die umlaufenden Materialerhebungen 16 eingeformt, welche quer zu den Materialerhebungen liegen. Diese Vertiefungen werden hierbei nicht oder nur zu einem geringen Grad spanabhebend gebildet. Vorzugsweise ist das Volumen von eventuellen Spanabhebungen zumindest geringer als das Volumen von ausgebildeten plastischen Verformungen.

Nach dem Einpressen des Verbindungsabschnitts 15 der Lenkwelle 2 in die Durchgangsöffnung 7 ist die Lenkwelle 2 mit der Kreuzgelenkgabel 1 gegenüber einer relativen Verdrehung der beiden Teile formschlüssig verbunden. Weiters wird durch den ausgebildeten Presssitz eine kraftschlüssige Verbindung zwischen der Lenkwelle 2 und der Kreuzgelenkgabel 1 ausgebildet.

Durch die geometrische Ausbildung der Zähne 23, 23' und/oder die Anpassung der Härten der Materialien der Lenkwelle 2 und der Kreuzgelenkgabel 1 bleiben die Zähne 23, 23' beim Einpressen der Lenkwelle 2 in die Durchgangsöffnung 7 vorzugsweise im Wesentlichen unverformt.

In den gezeigten Ausführungsbeispielen ist der Neigungswinkel α der Zahnkämme 24, 24' über die Länge der Zähne 23, 23' konstant und für alle Zähne 23, 23' gleich. Denkbar und möglich wäre es beispielsweise auch, die Zahnkämme 24, 24' mit sich über die Länge der Zähne 23, 23' ändernden Neigungen auszubilden bzw. nur abschnittsweise geneigt auszubilden. Die Höhen h der Zahnkämme 24, 24' sind vorzugsweise von der Sattelseite 6 zur Bodenseite 5 hin monoton fallend ausgebildet. Abschnitte der Längserstreckungen der Zähne 23, 23', in welchen die Höhen h der Zahnkämme 24, 24' konstant bleiben, sind denkbar und möglich.

Die Durchgangsöffnung 7 ist in den Figuren mit kreisrundem Querschnitt (abgesehen von der Verzahnung 14) dargestellt. Statt dessen wären auch andere Querschnitte der Durchgangsöffnung 7 denkbar und möglich, beispielsweise ein ovaler oder polygonaler Querschnitt.

Die Verbindung zwischen der weiteren Kreuzgelenkgabel 21 und der Lenkwelle 3 kann in analoger Weise wie die Verbindung zwischen der Kreuzgelenkgabel 1 und der Lenkwelle 2 ausgebildet sein.

### Legende zu den Hinweisziffern:

- 1: Kreuzgelenkgabel
- 2: Lenkwelle
- 3: Lenkwelle
- 4: Gabelbasis
- 5: Bodenseite
- 6: Sattelseite
- 7: Durchgangsöffnung
- 8: Schenkel
- 9: Schenkel
- 10: Lageröffnung
- 11: Lageröffnung
- 12: Lager
- 13: Gelenkkreuz
- 14.: Verzahnung
- 15: Verbindungsabschnitt
- 16: Materialerhebung
- 17: Längsachse
- 19: Deckel
- 20: Verstemmung
- 21: Kreuzgelenkgabel
- 22: Pfeil
- 23, 23': Zahn
- 24, 24': Zahnkamm
- 25: Längsachse
- 26: Längsachse
- 27: Längsachse
- 28: Mittellinie

## Patentansprüche

1. Verbindung einer Antriebswelle, insbesondere einer Lenkwelle (2), mit einer Kreuzgelenkgabel (1), welche eine Gabelbasis (4) mit einer eine Längsachse (25) aufweisenden Durchgangsöffnung (7) zur Aufnahme eines Verbindungsabschnitts (15) der Antriebswelle und zwei von einer Sattelseite (6) der Gabelbasis (4), die einer Bodenseite (5) der Gabelbasis (4) gegenüberliegt, abstehende Schenkel (8, 9) mit Lageröffnungen (10, 11) umfasst, wobei die Durchgangsöffnung (7) der Gabelbasis (4) mit einer Verzahnung (14) mit Zähnen (23, 23') versehen ist, deren Zahnkämme (24, 24') in Draufsicht auf einen jeweiligen Zahn (23, 23') gesehen in Richtung der Längsachse (25) der Durchgangsöffnung (7) verlaufen, und die Antriebswelle in die Durchgangsöffnung (7) der Gabelbasis (4) eingepresst ist, **dadurch gekennzeichnet, dass** die Antriebswelle einer mit umlaufenden Materialerhebungen (16) versehene Verbindungsabschnitt (15) aufweist und dass sich die Durchgangsöffnung (7) der Gabelbasis (4) durch einen zumindest abschnittsweise gegenüber der Längsachse (25) der Durchgangsöffnung (7) geneigten Verlauf der Zahnkämme (24, 24') der Zähne (23, 23') der Verzahnung (14) von der Bodenseite (5) zur Sattelseite (6) der Gabelbasis (4) hin verengt.

2. Verbindung nach Anspruch 1, **dadurch gekennzeichnet, dass** die Länge des Abschnitts, in dem die Zahnkämme einen geneigten Verlauf einnehmen, mehr als die Hälfte, bevorzugt mehr als zwei Drittel, noch mehr bevorzugt den gesamten Bereich, der Länge der Zahnkämme beträgt.

3. Verbindung nach Anspruch 1 und Anspruch 2, **dadurch gekennzeichnet, dass** die Höhen (h) der Zahnkämme (24, 24') von der Bodenseite (5) zur Sattelseite (6) der Gabelbasis (4) hin monoton steigend ausgebildet sind.

4. Verbindung nach einem der Ansprüche 1 bis 3, **dadurch gekennzeichnet, dass** die Neigungswinkel (α) der Zahnkämme (24, 24') über die Länge eines jeweiligen Zahns (23, 23') konstant sind und für alle Zähne (23, 23') gleich sind.

5. Verbindung nach Ansprüche 1 bis 4, **dadurch gekennzeichnet, dass** die Scheitel der umlaufenden Materialerhebungen (16) des Verbindungsabschnitts (15) der Antriebswelle auf dem Mantel eines gedachten Zylinders liegen.

6. Verbindung nach einem der Ansprüche 1 bis 5, **dadurch gekennzeichnet, dass** die umlaufenden Materialerhebungen (16) ringförmig ausgebildet sind.

7. Verbindung nach einem der Ansprüche 1 bis 6, **dadurch gekennzeichnet, dass** die Zahnkämme (24') der Zähne (23') der Verzahnung (14) in Form eines sich von der Sattelseite (6) zur Bodenseite (5) der Gabelbasis (4) hin verbreitenden Plateaus ausgebildet sind.

8. Verbindung nach einem der Ansprüche 1 bis 7, **dadurch gekennzeichnet, dass** sich die Breiten (b) der Zähne (23) von der Sattelseite (6) zur Bodenseite (5) hin verringern.

9. Verfahren zur Verbindung einer Antriebswelle, insbesondere einer Lenkwelle (2), mit einer Kreuzgelenkgabel (1), welche eine Gabelbasis (4) mit einer eine Längsachse (25) aufweisenden Durchgangsöffnung (7) zur Aufnahme eines Verbindungsabschnitts (15) der Antriebswelle und zwei von einer Sattelseite (6) der Gabelbasis (4), die einer Bodenseite (5) der Gabelbasis (4) gegenüberliegt, abstehende Schenkel (8, 9) mit Lageröffnungen (10, 11) umfasst, wobei die Durchgangsöffnung (7) der Gabelbasis (4) mit einer Verzahnung (14) mit Zähnen (23, 23') versehen wird, die in Draufsicht auf einen jeweiligen Zahn (23, 23') gesehen in Richtung der Längsachse (25) der Durchgangsöffnung (7) verlaufende Zahnkämme (24, 24') aufweisen, und der Verbindungsabschnitt (15) der Antriebswelle mit umlaufenden Materialerhebungen (16) versehen wird und der Verbindungsabschnitt (15) der Antriebswelle in die Durchgangsöffnung (7) der Gabelbasis (4) eingepresst wird, wobei die Durchgangsöffnung (7) der Gabelbasis (4) durch einen zumindest abschnittsweise zur Längsachse (25) der Durchgangsöffnung (7) geneigt ausgebildeten Verlauf der Zahnkämme (24, 24') der Zähne (23, 23') sich von der Bodenseite (5) zur Sattelseite (6) hin verengend ausgebildet wird.

10. Verfahren nach Anspruch 9, **dadurch gekennzeichnet, dass** die Verzahnung (14) zunächst durch ein spanabhebendes Verfahren mit parallel zur Längsachse (25) der Durchgangsöffnung (7) verlaufenden Zahnkämmen der Zähne (23') ausgebildet wird und in der Folge durch ein spanabhebendes Verfahren die geneigt zur Längsachse (25) der Durchgangsöffnung (7) verlaufenden Zahnkämme (24') ausgebildet werden.

11. Verfahren nach Anspruch 10, **dadurch gekennzeichnet, dass** die Verzahnung (14) mittels eines Umformwerkzeuges geformt wird, vorzugsweise gepresst wird.

## Claims

1. Connection of a drive shaft, in particular a steering shaft (2), to a universal joint yoke (1) comprising a yoke base (4) with a through opening (7), having a longitudinal axis (25), to receive a connecting portion (15) of the drive shaft and comprising two limbs (8, 9) which protrude from a saddle side (6), facing a bottom side (5) of the yoke base (4), of the yoke base (4) and which have bearing openings (10, 11), wherein the through opening (7) of the yoke base (4) is provided with toothing (14) with teeth (23, 23') whose toothed combs (24, 24') run in the direction of the longitudinal axis (25) of the through opening (7) when a particular tooth (23, 23') is viewed from above, and the drive shaft is forced into the through opening (7) of the yoke base (4), **characterised in that** the drive shaft has a connecting portion (15) provided with circumferential material elevations (16) and **in that** the through opening (7) of the yoke base (4) narrows from the bottom side (5) towards the saddle side (6) of the yoke base (4) by at least portions of a course of the toothed combs (24, 24') of the teeth (23, 23') of the toothing (14) being inclined with respect to the longitudinal axis (25) of the through opening (7).

2. A connection according to claim 1, **characterised in that** the length of the portion in which the toothed combs assume an inclined course is more than half, preferably more than two thirds, even more preferably the entire region, of the length of the toothed combs.

3. A connection according to claim 1 and claim 2, **characterised in that** the heights (h) of the toothed combs (24, 24') increase monotonically from the bottom side (5) towards the saddle side (6) of the yoke base (4).

4. A connection according to any one of claims 1 to 3, **characterised in that** the angles of inclination (α) of the toothed combs (24, 24') are constant over the length of a particular tooth (23, 23') and are the same for all teeth (23, 23').

5. A connection according to claims 1 to 4, **characterised in that** the apexes of the circumferential material elevations (16) of the connecting portion (15) of the drive shaft lie on the jacket of a notional cylinder.

6. A connection according to any one of claims 1 to 5, **characterised in that** the circumferential material elevations (16) are annular.

7. A connection according to any one of claims 1 to 6, **characterised in that** the toothed combs (24') of the teeth (23') of the toothing (14) are in the form of a plateau widening from the saddle side (6) towards the bottom side (5) of the yoke base (4).

8. A connection according to any one of claims 1 to 7, **characterised in that** the widths (b) of the teeth (23) decrease from the saddle side (6) towards the bottom side (5).

9. A method of connecting a drive shaft, in particular a steering shaft (2), to a universal joint yoke (1) comprising a yoke base (4) with a through opening (7), having a longitudinal axis (25), to receive a connecting portion (15) of the drive shaft and comprising two limbs (8, 9) which protrude from a saddle side (6), facing a bottom side (5) of the yoke base (4), of the yoke base (4) and which have bearing openings (10, 11), wherein the through opening (7) of the yoke base (4) is provided with toothing (14) with teeth (23, 23') which have toothed combs (24, 24') running in the direction of the longitudinal axis (25) of the through opening (7) when a particular tooth (23, 23') from above, and the connecting portion (15) of the drive shaft is provided with circumferential material elevations (16) and the connecting portion (15) of the drive shaft is forced into the through opening (7) of the yoke base (4), wherein the through opening (7) of the yoke base (4) narrows from the bottom side (5) towards the saddle side (6) by at least portions of a course of the toothed combs (24, 24') of the teeth (23, 23') being inclined with respect to the longitudinal axis (25) of the through opening (7).

10. A method according to claim 9, **characterised in that** first of all the toothing (14) is, by a cutting process, formed with toothed combs, of the teeth (23'), running parallel to the longitudinal axis (25) of the through opening (7) and subsequently the toothed combs (24') running at an incline to the longitudinal axis (25) of the through opening (7) are formed by a cutting process.

11. A method according to claim 10, **characterised in that** the toothing (14) is formed by means of a shaping tool, is preferably compression moulded.

## Revendications

1. Assemblage d'un arbre d'entraînement, notamment d'une colonne de direction (2) et d'une fourchette de joint de cardan (1) ayant une base de fourchette (4) munie d'un passage (7) d'axe longitudinal (25) pour recevoir un segment de liaison (15) de l'arbre d'entraînement ainsi que deux branches (8, 9), opposées, partant du côté intérieur (6) de la base de fourchette (4), à l'opposé du côté extérieur (5) de la base de fourchette (4), ces branches ayant des orifices formant des paliers (10, 11),
le passage (7) de la base de fourchette (4) comportant une denture (14) formée de dents (23, 23') dont les sommets (24, 24') en vue de dessus sur chaque dent (23, 23'), sont dirigés suivant l'axe longitudinal (25) du passage (7), et l'arbre d'entraînement est enfoncé de force dans le passage (7) de la base de fourchette (4),
**caractérisé en que**
l'arbre d'entraînement comporte un segment de liaison (15) muni de bossages périphériques de matière (16), et
le passage (7) de la base de fourchette (4) se rétrécit au moins par le tracé des sommets (24, 24') des dents (23, 23') inclinés au moins par segments, par rapport à l'axe longitudinal (25) du passage (7), de la denture (14), en partant du côté extérieur (5) vers le côté intérieur (6) de la base de fourchette (4).

2. Assemblage selon la revendication 1,
**caractérisé en ce que**
la longueur du segment suivant lequel les sommets des dents ont un tracé incliné, représente plus de la moitié et de préférence plus de deux tiers et notamment toute la zone de la longueur des sommets des dents.

3. Assemblage selon les revendications 1 et 2,
**caractérisé en ce que**
la hauteur (h) des sommets (24, 24') des dents augmente suivant une croissance monotone à partir du côté extérieur (5) vers le côté intérieur (6) de la base de fourchette (4).

4. Assemblage selon les revendications 1 à 3,
**caractérisé en ce que**
l'angle d'inclinaison (α) des sommets de dents (24, 24'), est constant sur la longueur de chaque dent (23, 23') et cet angle est le même pour toutes les dents (23, 23').

5. Assemblage selon les revendications 1 à 4,
**caractérisé en ce que**
les sommets des bossages périphériques de matière (16), du segment de liaison (15) de l'arbre d'entraînement, se situent sur l'enveloppe d'un cylindre géométrique.

6. Assemblage selon les revendications 1 à 5,
**caractérisé en ce que**
les bossages périphériques de matière (16), sont de forme annulaire.

7. Assemblage selon les revendications 1 à 6,
**caractérisé en ce que**
les sommets (24') des dents (23') de la denture (14) sont réalisés sous la forme d'un plateau allant en s'élargissant à partir du côté extérieur (6) vers le côté intérieur (5) de la base de fourchette (4).

8. Assemblage selon les revendications 1 à 7,
**caractérisé en ce que**
la largeur (b) des dents (23) diminue à partir du côté extérieur (6) vers le côté intérieur (5).

9. Procédé d'assemblage d'un arbre d'entraînement, notamment d'une colonne de direction (2) à une fourchette de joint de cardan (1) ayant une base de fourchette (4) avec un passage (7) d'axe longitudinal (25) pour recevoir un segment de liaison (15) de l'arbre d'entraînement, ainsi que deux branches (8, 9) en saillie à partir du côté intérieur (6) de la base de fourchette (4), à l'opposé du côté extérieur (5) de la base de fourchette (4), ces branches ayant des orifices formant des paliers (10, 11),
le passage (7) de la base de fourchette (4) étant muni d'une denture (14) avec des dents (23, 23') ayant en vue de dessus sur chaque dent (23, 23'), des sommets de dents (24, 24') dans la direction de l'axe longitudinal (25) du passage (7) et le segment de liaison (15) de l'arbre d'entraînement muni de bossages périphériques de matière (16) il est enfoncé de force dans le passage (7) de la base de fourchette (4),
selon lequel
le passage (7) de la base de fourchette (4) est formé par un tracé des sommets (24, 24') des dents (23, 23') inclinés au moins par segments par rapport à l'axe longitudinal (25) du passage (7), en diminuant à partir du côté extérieur (5) vers le côté intérieur (6).

10. Procédé selon la revendication 9,
**caractérisé en ce que**
la denture (14) est réalisée tout d'abord par un procédé d'usinage avec enlèvement de copeaux formant des sommets de dents (23') parallèles à l'axe longitudinal (25) du passage (7), et ensuite, par un procédé d'usinage par enlèvement de copeaux, on forme les sommets de dents (24') inclinés par rapport à l'axe longitudinal (25) du passage (7).

11. Procédé selon la revendication 10,
**caractérisé en ce que**
la denture (14) est formée avec un outil de mise en forme de préférence fonctionnant à la presse.
